(19) **Europäisches Patentamt**
**European Patent Office**
**Office européen des brevets**

(11) **EP 2 549 819 B1**

(12) **EUROPEAN PATENT SPECIFICATION**

(45) Date of publication and mention
of the grant of the patent:
**01.10.2014 Bulletin 2014/40**

(51) Int Cl.:
***H04W 72/12*** *(2009.01)*

(21) Application number: **11006027.4**

(22) Date of filing: **22.07.2011**

(54) **Method and apparatus for self-optimized scheduling**

Verfahren und Vorrichtung zur selbstoptimierten Ablaufplanung

Procédé et appareil de planification auto-optimisée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.01.2013 Bulletin 2013/04**

(73) Proprietor: **MIMOON GmbH
47057 Duisburg (DE)**

(72) Inventor: **Marandin, Dimitry
47057 Duisburg (DE)**

(74) Representative: **Eisenführ Speiser
Patentanwälte Rechtsanwälte PartGmbB
Postfach 31 02 60
80102 München (DE)**

(56) References cited:
**EP-A1- 1 758 312      EP-A1- 1 855 422
WO-A1-03/043273      US-A1- 2005 281 278**

• **YASIR ZAKI ET AL: "Multi-QoS-Aware Fair
Scheduling for LTE", VEHICULAR TECHNOLOGY
CONFERENCE (VTC SPRING), 2011 IEEE 73RD,
IEEE, 15 May 2011 (2011-05-15), pages 1-5,
XP031896754, DOI: 10.1109/VETECS.
2011.5956352 ISBN: 978-1-4244-8332-7**
• **Raymond Kwan et al: "A survey of scheduling and
interference mitigation in LTE", Journal of
Electrical and Computer Engineering, vol. 2010,
273486, 1 January 2010 (2010-01-01),
XP002665386, Retrieved from the Internet: URL:
http://downloads.hindawi.com/journals/ jece/
2010/273486.pdf [retrieved on 2011-12-08]**

**Description**

FIELD OF THE INVENTION

The present invention relates to a method, apparatus and computer program product for scheduling resources in time and frequency domains in communication networks.

BACKGROUND OF THE INVENTION

Fourth generation (4G) cellular systems, such as the Long Term Evolution (LTE) system, will provide broadband wireless access with quality of service (QoS). It is a task of a scheduler at the MAC (Medium Access Control) layer of an access device or base station (i.e. enhanced NodeB or eNodeB or eNB in LTE terminology) to schedule transmissions over the LTE air interface guaranteeing QoS requirements assigned to radio bearers.

The scheduler performs a dynamic and fast resource allocation, taking into account instantaneous link quality information and instantaneous packet arrival data rate. By following fluctuations of radio link quality and adapting its transmission properties (modulation and coding (MCS), scheduling resources, power allocation, etc.), the radio channel capacity is better utilized.

The scheduler receives inputs from various sources which affect the scheduling procedure. The output of the scheduler is a series of resource assignments (grants) for a downlink (DL) and uplink (UL) subframe. Resource assignments are defined in terms of resource scheduling blocks (SBs). One scheduling block consists of two resource blocks(RBs). Each RB occupies one slot in the time domain and twelve subcarriers in the frequency domain. The resource assignments output by the scheduler indicate the size of each transport block and what physical layer resources are to be used in sending it to the UE/eNodeB via Downlink Shared Channel (DL-SCH) and Uplink Shared Channel (UL-SCH) respectively. The resource assignment information is sent on the Physical Downlink Control Channel (PDCCH). Each UE monitors the PDCCH to obtain control information about assignments destined to it.

The main design challenge of the scheduling metric is to optimize spectral efficiency while satisfying QoS requirements. Many packet scheduling algorithms have been proposed, but their performance depends on many parameters (e.g. traffic characteristics, environment, mobility). The problem is to find the optimal settings of scheduling parameters so that operator's requirements are met. Moreover, with extensive use of smaller so-called Home eNodeBs (or HNBs or femtocells) e.g. for in-house applications, it may even be no longer possible to perform offline simulations to find out an optimal scheduling algorithm and its specific parameters for every Home eNodeB.

Additionally, there is no "optimal" scheduling algorithm that can work equally well under different conditions. Even the algorithms with claimed inherit adaptivity (i.e. proportional fair) cannot adapt so efficiently and thus waste cell capacity. For example, under low QoS requirements and with a small number of UEs (typical for femtocells), the maximum carrier-to-interference (C/I) scheduling algorithm can evenly well fulfill QoS requirements as the proportional fair algorithm but can provide better spectral efficiency. On the other side, the maximum C/I scheduling algorithm may not be able to satisfy high QoS requirements in some situations. In this case the proportional fair algorithm is more suitable.

The EP 1 758 312 A1 discloses a scheduling method depending on quality of service and channel properties, wherein as a basis for scheduling metrics, an information about potential data rates for at least some of combinations of service category and physical channel is calculated based on information about states of the subchannels and on the buffer status of the flows. The state information or channel quality information about the subchannels may be received from the receivers of the data or may be measured by the transmitter by channel estimation. Channel states are mapped on to potential data rates, where the mapping function of the user dependent channel state to the flow dependent data right may depend on the quality-of-service requirements of the respective flow. Then, priority values are calculated based on the information about potential data rates and the quality-of-service requirements of the flows. Scheduling is based on a priority function, wherein the combination of flow and a subchannel with currently highest value of the priority function is selected to be scheduled.

Furthermore, the WO 03/043273 A1 discloses a scheduler capable of maximizing aggregate throughput while achieving controlled amount of fairness among users and meeting quality-of-service requirements. For each excess terminal, a waiting factor is calculated based on a temporal fading factor, a throughput fairness factor, and a delay quality-of-service factor. The unit selected for transmission corresponds to the access terminal having the greatest overall weighting factor.

Additionally, the US 2005/0281278 A1 discloses adaptive delay management for allocating resources having different quality of service requirements. A forward link scheduler prepares transmission instances by treating pending data queues according to a priority class, such as Best Effort (BE) and Expedited Forwarding (EF). A scheduler that serves both BE and EF users may utilize an appropriate combination of proportionaly fair throughput and delay scheduling.

Finally, the EP 1 855 422 A1 discloses receiver feedback and broadcast signaling using busy bursts, wherein a status information on reception quality of a payload signal reception is included in a busy signal that in turn is received by the transmitter of the payload signal, so that the transmission can be adapted to the actual propagation condition. Therefore, interference condition in a network can be controlled, respectively quality of service measures can be used to adjust the transmission parameters of users carrying out different services. Thereby, an efficient means for managing radio recourses of the network is enabled.

SUMMARY

It is an object of the present invention to provide a flexible scheduler or scheduling function with improved adaptivity.

This object is achieved by a method as claimed in claim 1.

Additionally, the above object is achieved by an apparatus as claimed in claim 9.

Accordingly, a single scheduling metric can be made configurable in such a way that desired scheduling algorithms or policies can be implemented selectively. Thereby, multiple scheduling algorithms or policies are available with a relative simple implementation. The proposed self-optimization approach dynamically adjusts parameters of the scheduling metric (and thus the scheduling strategy) using a desired or operator-defined policy, e.g., highest priority is to guarantee QoS to users (i.e. terminal devices such as UEs) while maximizing cell spectral efficiency. By adjusting the parameters in the scheduling metric, the scheduling process can be adapted to maximize spectral efficiency under QoS constraints. Mobile operators are thus able to select different scheduler algorithms or policies (e.g., for testing purposes) within a single scheduler unit (e.g. software unit) simply by setting different parameters (e.g. of a scheduler application programming interface (API)). The proposed solution provides a simple implementation to obtain behavior of multiple scheduling algorithms with a single scheduling metric, wherein the algorithm and its parameter may be selected manually or may be self-optimized. Thus, the scheduling algorithm or policy and its required parameter may be selected manually (i.e. for test purposes) or may be selected by using a self-optimization feedback loop. This ensures better spectral efficiency under QoS constraints as compared to separated and manually configured algorithms. Moreover, the self-optimization algorithm avoids a need to perform offline simulation studies to find out the optimal scheduling algorithm for the considered situation and manually configure it at the base station. The proposed self-optimization option is especially valuable for efficient HNB deployments where manual configuration is not possible due to a large number of HNBs and lack of technical expertise at the customer side. Additionally, the proposed self-optimization option is especially valuable for deployments where the optimal settings are different depending on the cell shape and traffic load, so that efficient deployment is possible in cases of irregular cell shapes and different traffic patterns.

On the terminal side, the proposed scheduling approach ensures better QoS provision and higher throughputs.

The feedback information is compared with a threshold level, wherein the parameters are set based on the result of the comparison. At the initial state the parameters are set to operate in a maximum carrier-to-interference scheduling mode. As long as the feedback information indicates that the threshold level has not been reached, the scheduling parameter settings change into a second state corresponding to a proportional fair scheduling mode, and then if needed to a third state corresponding to a quality-of-service aware proportional fair scheduling mode. The parameters may be returned to the previous state when the feedback information indicates that the threshold level has been reached. Thereby, a specific mixed scheduling policy can be achieved, so as to optimize the scheduling process with regard to predetermined scheduling target criteria.

In a first more specific exemplary implementation, the scheduling parameters are a first parameter controlling strictness quality of service, a second parameter controlling impact of channel conditions, and a third parameter controlling fairness of scheduling. As an example, the first parameter may be adapted to exponentially control a quality-of-service weighting factor of a respective receiving terminal, the second parameter may be adapted to exponentially control a weight of an estimation of supported throughput of the respective receiving terminal, and the third parameter may be adapted to exponentially control a weight of the average delivered throughput of the respective terminal. Of course, the number of parameters and their impact on the scheduling may vary in dependence on the desired flexibility and available scheduling policies.

In a second more specific exemplary implementation which can be combined with the first more specific exemplary implementation, one of the parameters, which controls impact of quality of service, may be increased continuously from a minimum value in the third state, as long as the feedback information indicates that the threshold level has not been reached, and is continuously decreased until the minimum value has been reached, as long as the feedback information indicates that the threshold level has been reached.

In a third more specific exemplary implementation which can be combined with the first or second more specific exemplary implementation, the adjusting may be periodically updated each time transmission interval of the transmission link.

In a fourth more specific exemplary implementation which can be combined with any one of the first to third more specific exemplary implementations, the feedback information may indicate a fraction of receiving terminals that obtained via the transmission link a service equal to or above their quality requirement. As an example, the fraction may be calculated using exponential smoothing controlled by a smoothing parameter.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows an operational space of a scheduling process with an exemplary target operational point;

Fig. 2 shows a schematic block diagram of a scheduling apparatus according to a first embodiment;

Fig. 3 shows a state diagram of an adaptive scheduling procedure according to a second embodiment; and

Fig. 4 shows a schematic block diagram of software-based implementation according to a third embodiment.

DESCRIPTION OF THE EMBODIMENTS

In the following, embodiments of the present invention will be described based on an implementation of a resource block scheduler or scheduling function for a LTE network. However, it is to be noted that the present invention can be applied in various other types of cellular or wireless access networks where resources are to be scheduled among different users of a transmission link.

Uplink (UL) and downlink (DL) channels in the LTE air interface are divided into frames and each frame is divided into subframes. Each subframe is divided into two time slots. Each time slot is divided in the frequency domain into a number of resource blocks (RBs). Data is allocated to UEs in terms of scheduling blocks (SBs). Each SBs consists of two RBs. Depending on an OFDM sub-carrier spacing, an RB consists of 12 or 24 consecutive sub-carriers in the frequency domain. In the time domain, an RB consists of a plurality of consecutive OFDM symbols. The size of an RB is the same for all bandwidths, therefore the number of available physical resource blocks depends on the bandwidth. Depending on the required data rate, the scheduler can assign one or more SBs to each UE in each transmission time interval (TTI). The scheduling decision is done in the base station (i.e. eNB). The user data is carried on the Physical Downlink Shared Channel (PDSCH). Additionally, DL control signaling on the Physical Downlink Control Channel (PDCCH) is used to convey the scheduling decisions to individual UEs. The PDCCH is located in the first OFDM symbols of a slot.

In the following embodiments, only a single scheduling metric is used, that is configurable in such a way that it can reflect various scheduling algorithms or policies. This provides the advantage that the base station can be selectively controlled (e.g. by the vendor or network operator) to provide multiple scheduling algorithms with a relative simple implementation.

Moreover, self-optimization can be introduced, which dynamically adjusts parameters of the scheduling metric (and thus the scheduling strategy) using a desired operator-defined policy, e.g., highest priority is to guarantee QoS to users (i.e. UEs) while maximizing cell spectral efficiency. By adjusting the parameters in the scheduling metric, spectral efficiency can be maximized under QoS constraints.

The underlying principle of the proposed solution according to the embodiments is to change parameters of the scheduling metric in an adaptive way so that the desired scheduling policy or strategy can be achieved. In the following embodiments, the desired scheduling policy is to guarantee at highest priority a QoS above a predefined threshold value, wherein the aim with second highest priority is to maximize spectral efficiency.

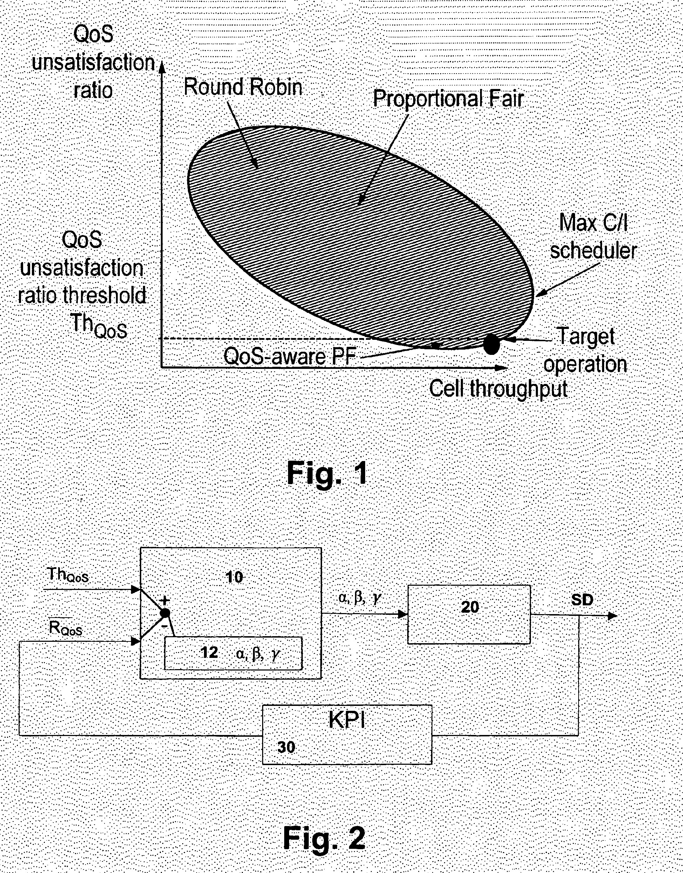

Fig. 1 shows an operational space of a scheduling process with an exemplary target operational point which reflects the above desired strategy. In the diagram of Fig. 1, the vertical axis of the operational space indicates the QoS unsatisfaction ratio achieved by the scheduling process, wherein a higher level on the vertical axis means that users are less satisfied with their received QoS. A threshold $Th_{QoS}$ is indicated, which is used to control the parameter setting in the adaptive scheduling metric according to the embodiments. The horizontal axis of the operational space indicates the cell throughput offered to a user by the scheduling process. The locations of different available scheduling algorithms or policies are indicated in the operational space of the scheduling process.

The round robing scheduling algorithm aims at scheduling UEs to provide the same data rate to all UEs without taking the instantaneous channel conditions and QoS requirements into account. Fair scheduling is achieved since on average the same data rate is scheduled to each UE (assuming full buffer case). Overall system performance is low due to low spectral efficiently and QoS requirements are not respected. This leads to a relatively low overall system performance with low cell throughput and high QoS unsatisfaction ratio. The round robin scheduling can be used in situations where inaccuracy of channel information is high (e.g. at high UEs mobility) and with relaxed or no QoS requirements.

The proportional fair (PF) scheduling algorithm aims at selecting the UE that can support the highest data rate on a considered RB relative to its average data rate. It maximizes spectral efficiency providing some degree of fairness between UEs in term of throughput (i.e. UE with bad channel will receive some throughput). QoS requirements are not respected. The obtained QoS unsatisfaction ratio is thus still quite high and cell throughput is moderate. The proportional fair scheduling can be used in situations where UEs experience on average different channel conditions with large variations in the instantaneous channel conditions, and at least low throughput should be provided to a UE with bad channel condition.

The maximum C/I scheduling algorithm aims at scheduling UEs with the current best channel conditions ignoring the past UE provided throughputs. Spectral efficiency and cell throughput are thus maximized while UEs with the bad channel conditions (i.e. cell-edge UEs) are disadvantaged and no QoS requirements are respected. Although, this leads to a lower QoS unsatisfaction ratio, it is still above the threshold. The maximum C/I scheduling can be used in situations where UEs experience on average similar channel conditions but with large variations in the instantaneous channel conditions (due to e.g. fast multi-path fading) and there is no strict QoS enforcement.

Finally, the QoS-aware proportional fair scheduling algorithm aims at selecting the UE that can support the highest data rate on a considered RB relative to its average data rate and proportional to its QoS satisfaction ratio. Spectral efficiency and cell throughput are maximized to a lower degree, as some degree of fairness between UEs in term of throughput is provided (i.e. UE with bad channel will receive some throughput) and QoS requirements are respected. The QoS-aware proportional fair scheduling can be used in situations where UEs experience on average different channel conditions with large variations in the instantaneous channel conditions, and QoS requirements should be fulfilled for all UEs.

In view of the desired scheduling policy of guaranteeing at highest priority a QoS above a predefined threshold value, while still maximizing spectral efficiency, the target operation point should be located at high cell throughputs and below the threshold $TH_{QoS}$.

Fig. 2 shows a schematic block diagram of a scheduling apparatus according to a first embodiment which may be provided in an access device, such as an eNB. The eNB may be implemented as a software defined radio (SDR) device, where major functionalities are implemented by software routines controlling digital signal processors (DSPs). The scheduling apparatus comprises a controller 10 which controls the scheduling process of a scheduler 20 based on scheduling parameters $\alpha$, $\beta$ and $\gamma$ to be supplied to the scheduler 20 in order to adapt the scheduling metric according to a desired scheduling policy or strategy. By adjusting the parameters $\alpha$, $\beta$ and $\gamma$ in the scheduling metric, spectral efficiency can be maximized while still respecting QoS requirements. In other words, the controller 10 is adapted to tune the scheduling settings in the direction of the desired target operation point shown in Fig. 1. To achieve this, the controller 10 comprises a tuning unit or function 12 which generates the required parameters $\alpha$, $\beta$ and $\gamma$ based on a manual input operation (which might define the desired scheduling policy or the desired parameter values) or based on an output of a comparator or comparator function which compares a QoS feedback information with the predefined threshold indicated in Fig. 1. In the latter case, a self-optimizing scheduling process can be achieved.

In the self-optimizing scheduling process of the scheduler 20, an adaptive or controllable scheduling procedure is used, where for each UE k, a scheduling metric ($SM_k$) is calculated per each $RB_j$:

$$SM_k(RB_j)[n] = \eta_k[n]^\gamma \frac{\breve{r}_k[n](RB_j)^\alpha}{T_k[n-1]^\beta} \qquad (1)$$

where $\breve{r}_k[n](RB_j)$ is an estimation of supported throughput of UE k, if it would be scheduled in the next subframe n on $RB_j$, $T_k[n]$ is a average delivered k-UE throughput in the past including subframe n, $\eta_k[n]$ is a QoS weighing factor of UE k, $\gamma$ is a scheduling parameter controlling the strictness of QoS, $\alpha$ is a scheduling parameter controlling the impact of channel conditions, and $\beta$ is a scheduling parameter controlling fairness.

The supported throughput of a concerned UE k can be estimated in each considered time transmission interval (TTI). More specifically an UE supported data rate for the next subframe is estimated. The input parameters for this estimation are a set of available RBs and channel quality information (e.g. channel quality indicator (CQI)) for each of these RBs. If subband CQI for the specific RB is not available, wideband CQI reports can be used. Additionally, the used transmission mode, the selected transmission scheme and rank indication (RI) reports can be checked to identify whether one or two transport blocks could be transmitted to this UE. An important constraint in LTE is that the assigned RBs for one UE in the concerned TTI have to use the same modulation and coding scheme (MCS). This constraint can be ignored in the estimation of the UE supported data rate for a simplified implementation. Thus, estimation of supported data rate on each RB can be performed independently from other RBs.

Furthermore, average UE throughput $T_k[n]$ is calculated as an average delivered throughput of UE k in the past including subframe n:

$$T_k[n] = (1 - \{B_k[n] > 0\}\frac{1}{N_k})T_k[n-1] + \frac{1}{N_k}r_k[n] \qquad (2)$$

where $r_k[n]$ is the actual acknowledged throughput of UE k in subframe n: If UE k is not scheduled in the subframe n, $r_k[n]=0$. Even if UE k is not scheduled in the subframe n, updating of its average rate $T_k[n]$ is performed. The average is updated in each subframe. $T_k[n]$ is estimated after reception of an acknowledgement (ACK) or when the data is sent the first time. Initially, the value $T_k$ is initialized to the guaranteed bit rate (GBR) value for UE k. However, $T_k[n]$ is not updated for retransmissions. The initial value $T_k[n]$ for non-GBR UEs could be set to a maximum supportable data rate. Then any initial value $T_k[n]$ for GBR-UEs will be smaller than for non-GBR-UEs. Thereby, a too high PF metric of non-GBR UEs can be avoided during initialization. $N_k$ represents the capacity a filter memory (1000 subfames, for example).

In equation (2), the term in the {} brackets is either "1" or "0" depending on whether the Boolean expression is right or wrong. $B_k[n]$ is the amount of data pending in the base station buffer for UE k after transmission in subframe n. Element $\{B_k[n] > 0\}$ ensures that the throughput estimate is only updated for UEs that have data. This is a practical formulation which ensures that UEs with empty buffers will not obtain high PF metric due to small delivered throughput in the past.

For QoS-requiring UEs, a QoS factor $\eta_k[n]$ is calculated as $\max(\eta_{k,GBR}[n], \eta_{k,delay}[n])$, where

$$\eta_{k,GBR}[n] = \{GBR_k > 0\}\frac{GBR_k}{T_{sch,k}[n]} \qquad (3)$$

$$\eta_{k,delay}[n] = \max\{\{D_{req,k}(l) > 0\}\frac{D_{exp,k}(l)}{D_{req,k}(l)}\} \qquad (4)$$

where $GBR_k$ is the sum guaranteed bit rate (GBR) of UE k over all its logical channels, $T_{sch,k}[n]$ is a past average throughput over the subframes where UE k is actually scheduled, $D_{exp,k}(l)$ is an average delay experienced by the head-of-line (HoL) packet since its entrance in the l-th logical channel queue or for simplified implementation it could be a period since logical channel (LCH) l was scheduled last time, $D_{req,k}(l)$ is a delay requirement for LCH l.

The throughput $T_{sch,k}[n]$ is a sum of throughputs for all LCHs, which can be calculated as follows:

$$T_{sch,k}[n] = (1 - \frac{\lambda_k[n]}{N_s})T_{sch,k}[n-1] + \frac{\lambda_k[n]}{N_s}r_k[n] \qquad (5)$$

where $\lambda_k[n]$ is a indicator value, $\lambda_k[n] =1$ when UE k was scheduled in TTI n, $\lambda_k[n] =0$ when UE k was not scheduled in TTI n, $r_k[n]$ is a scheduled throughput of UE k n the subframe n, $N_S$ is an exponential smoothing parameter used for smoothing of $T_{sch,k}[n]$.

In the self-optimizing case, the scheduling apparatus of Fig. 2 is designed as a closed-loop feedback control system. Quality feedback information $\overline{R_{QoS}[n]}$ which indicates the observed average satisfaction ratio of user is forwarded by a feedback unit 30 to a comparator of the controller 10 where it is compared to the threshold $Th_{QoS}$ which may be set according to an operator's QoS policy. Then, the tuning unit 12 of the controller 10 adjusts the parameters $\alpha$, $\beta$, $\gamma$

for the scheduler 20 based on the output of the comparator and the scheduler determines scheduling decisions SD based on the parameter setting of the scheduling metric. The controller 10 may operate on a longer timescale than the scheduler 20 to avoid instability and oscillations. The feedback unit 30 may obtain the feedback information based on measured key performance indicators (KPIs) or control information which may have been signaled from the scheduled UEs.

The self-optimization is thus based on an observation of a QoS satisfaction ratio that may be updated each TTI. The QoS satisfaction ratio $R_{QoS}$ is defined as a fraction of UEs that obtained service above or equal their QoS requirement. It can be calculated by using exponential smoothing controlled by a parameter $N_{QoS\_ratio}$ with a value between "0" and "1", as follows:

$$\overline{R_{QoS}[n]} = (1 - \frac{1}{N_{QoS\_ratio}})\overline{R_{QoS}[n-1]} + \frac{1}{N_{QoS\_ratio}} R_{QoS}[n] \tag{6}$$

where $R_{QoS}[n]$ is a ratio of satisfied UEs in TTI n, $\overline{R_{QoS}[n]}$ is the observed average QoS satisfaction ratio, $N_{QoS-ratio}$ is the exponential smoothing parameter used for smoothing of $\overline{R_{QoS}[n]}$.

The effect of different extreme parameter settings in equation (1) on the scheduling behavior is summarized in **Table 1:**

Table 1

| Parameter setting | Scheduling mode |
|---|---|
| $\alpha=0$, $\beta=1$, $\gamma=0$ | The mode schedules UEs to provide the same datarate to all UEs without taking the instantaneous channel conditions and QoS requirements into account (round-robin strategy). |
| $\alpha=1$, $\beta=0$, $\gamma=0$ | The mode schedules UEs with the current best channel conditions ignoring the past UE provided throughputs (max-C/I scheduling) |
| $\alpha=1$, $\beta=1$, $\gamma=0$ | The mode selects the UE that can support the highest data rate on considered RB relative to its average data rate (proportional fair). |
| $\alpha=1$, $\beta=1$, $\gamma=1$ | The mode selects the UE that can support the highest data rate on considered RB relative to its average data rate and proportional to its QoS satisfaction ratio (QoS-aware proportional fair). |

In the manual setting case, the optimal choice of parameters $\alpha$, $\beta$ and $\gamma$ can be selected and manually set or input based on off-line simulation studies under specific system conditions (e.g., traffic models, mobility model, operator policy).

It is noted that the tuning block 12, the scheduling block 20 and the feedback block 30 of the scheduling apparatus of Fig. 2 may be implemented as discrete signal processing circuits or, alternatively, as threads or software routines.

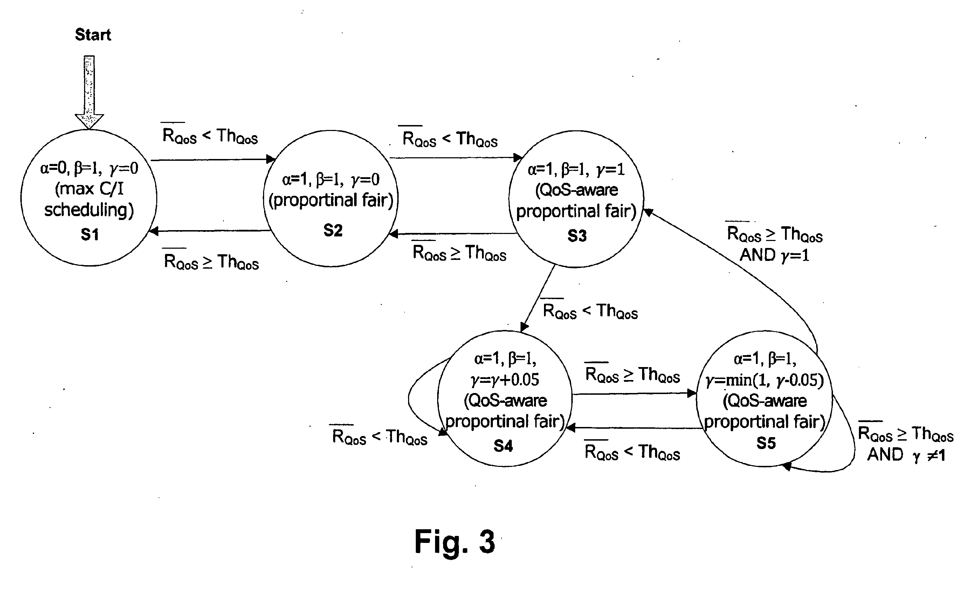

Fig. 3 shows a state diagram of a scheduling procedure according to a second embodiment. The state of the scheduling algorithm or metric is represented as a specific constellation of the scheduling parameters $\alpha$, $\beta$ and $\gamma$. At each time instant t only one state transition is possible. The initial configuration (or state) S1 of the scheduling algorithm is a state corresponding to a parameter setting $\alpha=0$, $\beta=1$ and $\gamma=0$ that corresponds to the maximum C/I scheduling mode and targets to maximize spectral efficiency.

At regular time instants the quality feedback information $\overline{R_{QoS}[n]}$ is compared to the threshold $Th_{QoS}$ ($0 \leq Th_{QoS} \leq 1$) to check the current QoS-fulfillment performance.

If the algorithm operates in max C/I scheduling mode (i.e. state S1) and observes that the quality feedback information $\overline{R_{QoS}[n]}$ is lower than the threshold $Th_{QoS}$, the scheduling parameter set is changed to $\alpha=1$, $\beta=1$ and $\gamma=0$ (state S2) that corresponds to the proportional fair scheduling mode. If the quality feedback information $\overline{R_{QoS}[n]}$ is below the threshold $Th_{QoS}$ in the proportional fair scheduling mode (i.e. state S2), the scheduling procedure (e.g. operation of the scheduler 20 in Fig. 2) is switched to state S3 with a parameter setting $\alpha=1$, $\beta=1$ and $\gamma=1$ that corresponds to the QoS-aware proportional fair scheduling mode. If the quality feedback information $\overline{R_{QoS}[n]}$ still remains below the threshold $Th_{QoS}$, new states S4 and S5 are selectively entered, where the parameter $\gamma$ is continuously adjusted according to the following strategy:

$$\gamma = \gamma + 0.05 \text{ if } \overline{R_{QoS}[n]} < \text{Th}_{QoS} \text{ (state S4); and}$$

$$\gamma = \gamma - 0.05 \text{ if } \overline{R_{QoS}[n]} \geq \text{Th}_{QoS} \text{ and } \gamma \neq 1 \text{(state S5).} \qquad (7)$$

If $\gamma = 1$ is reached in state S5 and if $\overline{R_{QoS}[n]} \geq \text{Th}_{QoS}$, the algorithm has entered state S3 again. If $\overline{R_{QoS}[n]} \geq \text{Th}_{QoS}$, the scheduling procedure is switched by the new parameter settings $\alpha=1$, $\beta=1$ and $\gamma=0$ to the proportional fair scheduling mode of state S2. If $\overline{R_{QoS}[n]} \geq \text{Th}_{QoS}$ in the proportional fair scheduling mode of state S2, then the scheduling procedure is switched by the new parameter settings $\alpha=0$, $\beta=1$ and $\gamma=0$ to the max C/I scheduling mode.

Consequently, the scheduling procedure is self-controlled to automatically change the parameter settings based on a comparison of the quality feedback information with the desired quality threshold so as to optimize scheduling in accordance with a desired scheduling strategy.

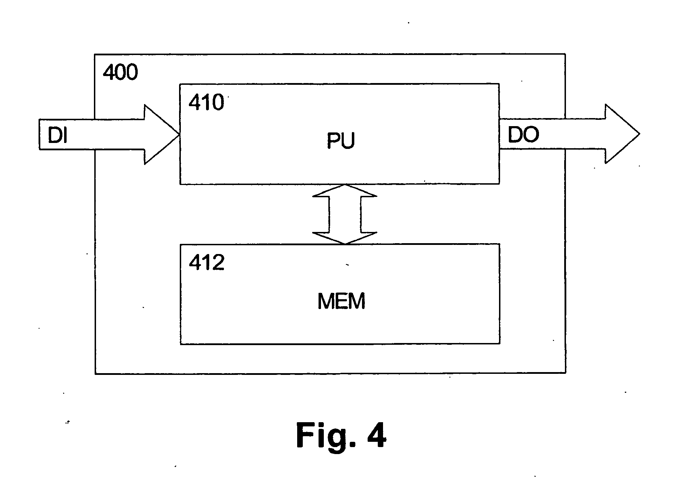

Fig. 4 shows a schematic block diagram of an alternative software-based implementation according to a third embodiment. The required functionalities can be implemented in a baseband subsystem 400 of an eNB with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps described in connection with of Figs. 2 and 3, which may be implemented as the above mentioned software routines. The processing steps may be performed on the basis of input data DI and may generate output data DO. In case of the proposed scheduler, the input data DI may correspond to the feedback information or manual parameter setting input, and the output data DO may correspond to the adjusted parameters $\alpha$, $\beta$, $\gamma$ and/or the scheduling decision SD.

Consequently, the functionalities of the above embodiments may be implemented as a computer program product comprising code means for generating each individual step of the frame alignment procedure when run on a computer device or data processor of the respective entity.

In summary, a method and apparatus for scheduling resources of a transmission link in time and frequency domain have been described, wherein a single scheduling metric is controlled based on parameters to switch among different scheduling policies. Thereby, self-optimization of the scheduling process can be achieved by dynamically adjusting the parameters and thus the scheduling strategy so as to guarantee QoS to users while maximizing cell spectral efficiency.

It is apparent that the invention can easily be extended to scheduler and scheduling procedure of any access device and system and is not restricted to LTE networks. Depending on the scheduling metric, other suitable parameters and another number of parameters could be used to adapt the scheduling metric to a desired scheduling behaviour by switching among different parameter values. The proposed embodiments can be implemented in connection with any base station or access device for scheduling resources in time and frequency domains of communication networks. The embodiments may thus vary within the scope of the attached claims.

## Claims

1.  A method of scheduling resources of a transmission link in time and frequency domain, said method comprising:

    a. scheduling (20) said resources by using a scheduling metric which depends on parameters each adapted to control an impact of a different scheduling criterion on a scheduling decision, said scheduling criterion being selected from quality of service, channel conditions and fairness of said scheduling;
    b. providing feedback information indicating service quality received via said transmission link; and
    c. adjusting (10) said parameters in dependence on said feedback information. **characterized by**
    d. comparing said feedback information with a threshold level;
    e. setting (12) said at least two parameters based on the result of said comparison;
    f. wherein said parameters are initially set to a first state (31) in which a maximum carrier-to-interference scheduling is achieved, and as long as said feedback information indicates that said threshold level has not been reached said parameters are set to a second state (52) in which the behavior of a proportional fair scheduling is achieved, and as long as said feedback information in the second state indicates that said threshold level has not been reached the parameter settings are set corresponding to a third state (53) in which the behavior of a quality-of-service aware proportional fair scheduling mode is achieved.

**2.** The method according to claim 1, wherein a first parameter controls strictness of quality of service, a second parameter controls impact of channel conditions, and a third parameter controls fairness of said scheduling.

**3.** The method according to claim 2, wherein said first parameter exponentially controls a quality-of-service weighting factor of a respective receiving terminal, wherein said second parameter exponentially controls an estimation of supported throughput of said respective receiving terminal, and wherein said third parameter exponentially controls an average delivered throughput of said respective terminal.

**4.** The method according to any one of the proceeding claims, wherein said parameters are set to the previous state when said feedback information indicates that said threshold level has been reached.

**5.** The method according to claim4, wherein one of said parameters, which controls impact of quality of service, is continuously increased from a minimum value in said third state, as long as said feedback information indicates that said threshold level has not been reached, and is continuously decreased until said minimum value has been reached, as long as said feedback information indicates that said threshold level has been reached.

**6.** The method according to any one of the preceding claims, wherein said adjusting is periodically updated each time transmission interval of said transmission link.

**7.** The method according to any one of the preceding claims, wherein said feedback information indicates a fraction of receiving terminals that obtained via said transmission link a service equal to or above their quality requirement.

**8.** The method according to claim 7, wherein said fraction is calculated using exponential smoothing controlled by a smoothing parameter.

**9.** An apparatus for scheduling resources of a transmission link in time and frequency domain, said apparatus comprising:

   a. scheduling means (20) for scheduling said radio resources by using a scheduling metric which depends on parameters each adapted to control an impact of a different scheduling criterion on a scheduling decision, said scheduling criterion being selected from quality of service, channel conditions and fairness of said scheduling; and
   b. setting means (10) for setting said parameters in dependence on a feedback information indicating service quality received via said transmission link
   **characterized by**
   c. comparing means for comparing said feedback information with a threshold level; and
   d. setting means (12) for setting said parameters based on the output of said comparing means;
   e. wherein said setting means (12) is adapted to successively set said parameters starting from a first state (31) in which said scheduling means (20) operate according to a maximum carrier-to-interference scheduling, through a second state (32) in which said scheduling means (20) operate according to a proportional fair scheduling, to a third state (33) in which said scheduling means (20) operate according to a quality-of-service aware proportional fair scheduling, as long as said output of said comparing means indicates that said threshold level has not been reached.

**10.** A network access device comprising an apparatus according to claim 9.

**11.** A computer program product comprising code means for producing the steps of method claim 1 when run on a computer device.

**Patentansprüche**

**1.** Verfahren zum Zuordnen von Ressourcen einer Übertragungsverbindung im Zeit- und Frequenzbereich, wobei das Verfahren umfasst:

   a. Zuordnen (20) der Ressourcen durch Verwenden einer Zuordnungsmetrik, die von Parametern abhängig ist, die jeweils ausgestaltet sind zum Steuern einer Auswirkung eines anderen Zuordnungskriteriums auf eine Zuordnungsentscheidung, wobei das Zuordnungskriterium ausgewählt ist aus Dienstqualität, Kanalzuständen und Zuordnungsfairness;

b. Bereitstellen einer Rückkopplungsinformation, die eine über die Übertragungsverbindung empfangene Dienstqualität angibt; und

c. Einstellen (10) der Parameter in Abhängigkeit der Rückkopplungsinformation,

**gekennzeichnet durch**

d. Vergleichen der Rückkopplungsinformation mit einem Schwellwertpegel;

e. Festlegen (12) der zumindest zwei Parameter basierend auf dem Ergebnis des Vergleichens;

f. wobei die Parameter anfänglich in einen ersten Zustand (31) versetzt werden, bei dem eine Zuordnung mit maximalem Träger-Störungs-Verhältnis erreicht wird, und solange die Rückkopplungsinformation angibt, dass der Schwellwertpegel nicht erreicht ist, werden die Parameter in einen zweiten Zustand (52) versetzt, in dem eine proportional faire Zuordnung erreicht wird, und solange die Rückkopplungsinformation in dem zweiten Zustand angibt, dass der Schwellwertpegel nicht erreicht wurde, werden die Parametereinstellungen gemäß einem dritten Zustand (53) festgelegt, bei dem das Verhalten einer dienstqualitätsbewussten proportional fairen Zuordnungsbetriebsart erreicht wird.

2. Verfahren nach Anspruch 1, wobei ein erster Parameter eine Striktheit der Dienstqualität steuert, ein zweiter Parameter eine Auswirkung der Kanalzustände steuert, und ein dritter Parameter die Fairness der Zuordnung steuert.

3. Verfahren nach Anspruch 2, wobei der erste Parameter einen Dienstqualitätsgewichtungsfaktor eines entsprechenden Empfangsendgeräts exponentiell steuert, wobei der zweite Parameter eine Schätzung eines unterstützten Durchsatzes des entsprechenden Empfangsendgeräts exponentiell steuert, und wobei der dritte Parameter einen durchschnittlich gelieferten Durchsatz des entsprechenden Endgeräts exponentiell steuert.

4. Verfahren nach einem der vorhergehenden Ansprüche, wobei die Parameter in einen vorherigen Zustand versetzt werden, wenn die Rückkopplungsinformation anzeigt, dass der Schwellwertpegel nicht erreicht worden ist.

5. Verfahren nach Anspruch 4, wobei einer der Parameter, der die Auswirkung der Dienst qualität steuert, fortlaufend ausgehend von einem Minimalwert in dem dritten Zustand erhöht wird, solange die Rückkopplungsinformation anzeigt, dass der Schwellwertpegel noch nicht erreicht worden ist, und fortlaufend verringert wird, bis der Minimalwert erreicht worden ist, solange die Rückkopplungsinformation anzeigt, dass der Schwellwertpegel erreicht wurde.

6. Verfahren nach einem der vorhergehenden Ansprüche, wobei die Einstellung mit jedem Zeitübertragungsintervall der Übertragungsverbindung periodisch aktualisiert wird.

7. Verfahren nach einem der vorhergehenden Ansprüche, wobei die Rückkopplungsinformation einen Anteil von Empfangsendgeräten angibt, die über die Übertragungsverbindung einen Dienst erhalten haben, der größer oder gleich ihrer Qualitätsanforderungen ist.

8. Verfahren nach Anspruch 7, wobei der Anteil errechnet wird unter Verwendung einer durch einen Glättungsparameter gesteuerten exponentiellen Glättung.

9. Vorrichtung zum Zuordnen von Ressourcen für eine Übertragungsverbindung im Zeit- und Frequenzbereich wobei die Vorrichtung umfasst:

a. Zuordnungsmittel (20) zum Zuordnen der Ressourcen unter Verwendung einer Zuordnungsmetrik, die von Parametern abhängig ist, die jeweils ausgestaltet sind zum Steuern einer Auswirkung eines anderen Zuordnungskriteriums auf eine Zuordnungsentscheidung, wobei das Zuordnungskriterium ausgewählt ist aus Dienstqualität, Kanalzuständen und Fairness der Zuordnung; und

b. Einstellmittel (10) zum Festlegen der Parameter in Abhängigkeit einer Rückkopplungsinformation, die eine über die Übertragungsverbindung empfangene Dienstqualität angibt;

**gekennzeichnet durch**

c. Vergleichsmittel zum Vergleichen der Rückkopplungsinformation mit einem Schwellwertpegel; und

d. Einstellmittel (12) zum Festlegen der Parameter basierend auf der Ausgabe der Vergleichsmittel;

e. wobei die Einstellmittel (12) ausgestaltet sind zum aufeinanderfolgenden Festlegen der Parameter ausgehend von einem ersten Zustand (31) in dem die Zuordnungsmittel (20) gemäß einer Zuordnung mit maximalem Träger-Störungs-Verhältnis arbeiten, über einen zweiten Zustand (32), in dem die Zuordnungsmittel (20) gemäß einer proportional fairen Zuordnung arbeiten, zu einem dritten Zustand (33), in dem die Zuordnungsmittel (20) gemäß einer dienstqualitätsbewussten proportional fairen Zuordnung arbeiten, solange die Ausgabe der Vergleichsmittel anzeigt, dass der Schwellwertpegel noch nicht erreicht wurde.

**10.** Netzzugangsgerät mit einer Vorrichtung nach Anspruch 9.

**11.** Computerprogrammprodukt mit Codemitteln zum Erzeugen der Schritte des Verfahrensanspruchs 1 bei dessen Ausführung auf einer Computervorrichtung.

**Revendications**

**1.** Procédé de planification de ressources d'une liaison de transmission dans le domaine temporel et fréquentiel, procédé dans lequel :

a. on planifie (20) les ressources en utilisant une métrique de planification qui dépend de paramètres adaptés chacun pour commander un impact d'un critère de planification différent sur une décision de planification, le critère de planification étant choisi parmi la qualité de service, les conditions de canal et l'équité de la planification ;
b. on fournit de l'information de réaction indiquant la qualité du service reçu par l'intermédiaire de la liaison de transmission ; et
c. on ajuste (10) les paramètres en fonction de l'information de réaction ;
**caractérisé en ce que**
d. on compare l'information de réaction à un niveau de seuil ;
e. on fixe (12) les au moins deux paramètres sur la base du résultat de la comparaison ;
f. dans lequel les paramètres sont fixés initialement à un premier état (31), dans lequel une planification maximum porteuse à interférence est obtenue et, tant que l'information de réaction indique que le niveau de seuil n'a pas été atteint, les paramètres sont fixés à un deuxième état (52), dans lequel le comportement d'une planification équitable proportionnellement est atteinte et, tant que l'information de réaction dans le deuxième état indique que le niveau de seuil n'a pas été atteint, les fixations de paramètres sont fixées d'une manière correspondant à un troisième état (53), dans lequel le comportement d'un mode de planification équitable proportionnelle tenant compte de la qualité de service est atteint.

**2.** Procédé suivant la revendication 1, dans lequel un premier paramètre commande la rigueur de la qualité de service, un deuxième paramètre commande l'impact des conditions de canal et un troisième paramètre commande l'équité de la planification.

**3.** Procédé suivant la revendication 2, dans lequel le premier paramètre commande exponentiellement un facteur de pondération de la qualité du service d'un terminal récepteur respectif, dans lequel le deuxième paramètre commande exponentiellement une estimation de la capacité supportée du terminal de réception respectif et dans lequel le troisième paramètre commande exponentiellement une capacité moyenne fournie du terminal respectif.

**4.** Procédé suivant l'une quelconque des revendications précédentes, dans lequel les paramètres sont fixés à l'état précédent, lorsque l'information de réaction indique que le niveau de seuil a été atteint.

**5.** Procédé suivant la revendication 4, dans lequel l'un des paramètres, qui commande l'impact de la qualité de service, est augmenté continuellement d'une valeur minimum dans le troisième état, tant que l'information de réaction indique que le niveau de seuil n'a pas été atteint, et est diminué continuellement jusqu'à ce que la valeur minimum soit atteinte, tant que l'information de réaction indique que le niveau de seuil a été atteint.

**6.** Procédé suivant l'une quelconque des revendications précédentes, dans lequel l'ajustement est mis à jour périodiquement à chaque intervalle de transmission dans le temps de la liaison de transmission.

**7.** Procédé suivant l'une quelconque des revendications précédentes, dans lequel l'information de réaction indique une fraction de terminaux de réception, qui obtiennent par la liaison de transmission un service égal ou supérieur à leur exigence de qualité.

**8.** Procédé suivant la revendication 7, dans lequel on calcule la fraction en utilisant un lissage exponentiel commandé par un paramètre de lissage.

**9.** Dispositif de planification de ressources d'une liaison de transmission dans le domaine temporel et fréquentiel, le dispositif comprenant :

a. un moyen (20) de planification pour planifier les ressources radio en utilisant une métrique de planification qui dépend de paramètres adaptés chacun pour commander un impact d'un critère de planification différent sur une décision de planification, le critère de planification étant choisi parmi la qualité de service, les conditions de canal et l'équité de la planification et

b. un moyen (10) de fixation pour fixer les paramètres en fonction d'une information de réaction indiquant une qualité de service reçu par l'intermédiaire de la liaison de transmission ;

**caractérisé par**

c. un moyen de comparaison pour comparer l'information de réaction à un niveau seuil ; et

d. un moyen (12) de comparaison pour fixer les paramètres sur la base de ce qui sort du moyen de comparaison ;

e. dans lequel le moyen (12) de comparaison est conçu pour fixer successivement les paramètres en partant d'un premier état (31), dans lequel le moyen (20) de planification fonctionne suivant une planification maximum porteuse à interférence en passant par un deuxième état (32), dans lequel le moyen (20) de planification fonctionne suivant une planification équitable proportionnelle à un troisième état (33), dans lequel le moyen (20) de planification fonctionne suivant une planification équitable proportionnelle tenant compte de la qualité de service, tant que ce qui sort du moyen de comparaison indique que le niveau de seuil n'a pas été atteint.

10. Dispositif d'accès à un réseau comprenant un dispositif suivant la revendication 9.

11. Produit de programme d'ordinateur comprenant des moyens de code pour produire les stades du procédé de la revendication 1, lorsqu'il passe sur un dispositif d'ordinateur.

**Fig. 1**

**Fig. 2**

$\overline{R_{QoS}} < Th_{QoS}$

$\overline{R_{QoS}} < Th_{QoS}$

$\alpha=0,\ \beta=1,\ \gamma=0$
(max C/I
scheduling)
**S1**

$\alpha=1,\ \beta=1,\ \gamma=0$
(proportinal fair)
**S2**

$\alpha=1,\ \beta=1,\ \gamma=1$
(QoS-aware
proportinal fair)
**S3**

$\overline{R_{QoS}} \geq Th_{QoS}$

$\overline{R_{QoS}} \geq Th_{QoS}$

$\overline{R_{QoS}} \geq Th_{QoS}$
AND $\gamma=1$

$\overline{R_{QoS}} < Th_{QoS}$

$\alpha=1,\ \beta=1,$
$\gamma=\gamma+0.05$
(QoS-aware
proportinal fair)
**S4**

$\overline{R_{QoS}} \geq Th_{QoS}$

$\alpha=1,\ \beta=1,$
$\gamma=\min(1,\ \gamma-0.05)$
(QoS-aware
proportinal fair)
**S5**

$\overline{R_{QoS}} < Th_{QoS}$

$\overline{R_{QoS}} < Th_{QoS}$

$\overline{R_{QoS}} < Th_{QoS}$

$\overline{R_{QoS}} \geq Th_{QoS}$
AND $\gamma \neq 1$

## Fig. 3

EP 2 549 819 B1

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1758312 A1
- WO 03043273 A1
- US 20050281278 A1
- EP 1855422 A1